# EUROPEAN PATENT APPLICATION

(11) **EP 4 357 835 A1**
(43) Date of publication of application: **24.04.2024**
(21) Application number: 22824319.2
(22) Date of filing: 17.06.2022
(51) Int. Cl.: G02B 27/01

(54) **ROTATING SHAFT MECHANISM AND GLASSES COMPRISING SAME**

(30) Priority: 17.06.2021 CN 202110674144; 17.06.2021 CN 202110674067; 16.08.2021 CN 202121911595 U
(71) Applicant: Matrixed Reality Technology Co., Ltd., Wuxi, Jiangsu 214028 (CN)
(72) Inventor: WANG, Jun, Beijing 100098 (CN); LIU, Yang, Beijing 100098 (CN)
(74) Representative: Grünecker Patent- und Rechtsanwälte PartG mbB
(86) International application number: PCT/CN2022/099418
(87) International publication number: WO 2022/262847

(57) **Abstract**

Embodiments of the present application provide a rotating shaft mechanism, a connection mechanism for glasses, and glasses. The rotating shaft mechanism includes: a first component having a first abutting portion; and a second component having a second abutting portion, the second component being rotatably connected to the first component, and the second component being rotatable relative to the first component and having a first position and a second position. The first component includes a cooperating portion, and when the second component is in the first position, the first abutting portion interacts with the second abutting portion to maintain the second component in the first position, and when the second component is in the second position, the cooperating portion interacts with the second abutting portion to maintain the second component in the second position; or the second component includes a cooperating portion, and when the second component is in the first position, the first abutting portion interacts with the second abutting portion to maintain the second component in the first position, and when the second component is in the second position, the first abutting portion interacts with the cooperating portion to maintain the second component in the second position.

## Description

### TECHNICAL FIELD

The present application relates to the technical field of glasses, and in particular, to a rotating shaft mechanism and glasses including a rotating shaft mechanism.

### BACKGROUND

With the development of technologies such as virtual reality (VR), augmented reality (AR) and mixed reality (MR), more and more smart wearable devices are becoming familiar to people. Among them, the most familiar are smart glasses. Spectacle frame connection structures of the smart glasses generally include two types. In one type of structure, temples and a frame are in rigid connection or are one piece. Folding is impossible in this mode of connection, resulting in that the smart glasses are less comfortable to wear, and do not stay stably during wearing. In the other type of structure, temples are hinged with a frame. The temples can be folded, but in an unfolded state, the angles of the temples cannot be adjusted in multiple directions, and there are problems of a poor damping effect and resilience effect, likely resulting in that the smart glasses are less comfortable to wear, and do not stay stably during wearing.

### SUMMARY

In view of the above problems of the prior art, the present application provides a rotating shaft mechanism and glasses including the rotating shaft mechanism. Embodiments of the present application adopt the following technical solution:
Embodiments of the present application provide a rotating shaft mechanism, which includes: a first shaft; a first component having a first abutting portion; and a second component having a second abutting portion, the second component being rotatably connected to the first component by the first shaft, and the second component being rotatable relative to the first component in a preset angular range and having a first position and a second position. The first component and the second component are configured in one of the following arrangements: the first component incudes a cooperating portion, the cooperating portion adjoining the first abutting portion, with a first included angle therebetween, wherein when the second component is in the first position, the first abutting portion interacts with the second abutting portion to maintain the second component in the first position, and when the second component is in the second position, the cooperating portion interacts with the second abutting portion to maintain the second component in the second position; and the second component includes a cooperating portion, the cooperating portion adjoining the second abutting portion, with a second included angle therebetween, wherein when the second component is in the first position, the first abutting portion interacts with the second abutting portion to maintain the second component in the first position, and when the second component is in the second position, the first abutting portion interacts with the cooperating portion to maintain the second component in the second position.

Embodiments of the present application also provide glasses, which include: a spectacle frame and temples, the glasses further including the above-described rotating shaft mechanism, wherein the spectacle frame is configured as the first component, and each temple is connected to the spectacle frame by the second component.

The summary of various implementations or examples of the technology described in the present application is not full disclosure of full scope or all features of the disclosed technology.

### BRIEF DESCRIPTION OF THE DRAWINGS

In the accompanying drawings, which are not necessarily drawn to scale, same reference signs may be used in different views to describe similar components. Same reference signs with letter suffixes or different letter suffixes may denote different examples of similar components. The drawings generally show various embodiments by way of example rather than limitation, and are used together with the specification and the claims to illustrate the embodiments of the application. Where appropriate, same reference signs are used in all drawings to denote same or similar parts. Such embodiments are illustrative and are not intended to be exhaustive or exclusive embodiments of the present apparatus or method.
Fig. 1 is a schematic view of a limiting structure of a connection mechanism of the present application.
Fig. 2 is a schematic view of another limiting structure of a connection mechanism of the present application.
Fig. 3 is a stereoscopic structural diagram of a third component in embodiment 1 of a connection mechanism of the present application.
Fig. 4 is a stereoscopic structural diagram of a second component in embodiment 1 of a connection mechanism of the present application.
Fig. 5 is an assembly diagram of a second component and a third component in embodiment 1 of a connection mechanism of the present application.
Fig. 6 is an exploded view of Fig. 5.
Fig. 7 is a schematic view of Embodiment 1 of a connection mechanism of the present application in a first state.
Fig. 8 is a schematic view of Embodiment 1 of a connection mechanism of the present application in a second state.
Fig. 9 is an exploded view of a second shaft and a third component in embodiment 1 of a connection mechanism of the present application.
Fig. 10 is a schematic view of a second shaft and a third component in embodiment 1 of a connection mechanism of the present application after assembly.
Fig. 11 is a stereoscopic view of embodiment 2 of a connection mechanism of the present application.
Fig. 12 is an exploded view of embodiment 2 of a connection mechanism of the present application.
Fig. 13 is a structural diagram of embodiment 2 of a connection mechanism of the present application when a third component does not swing.
Fig. 14 is a structural diagram of embodiment 2 of a connection mechanism of the present application when a third component swings.
Fig. 15 is another structural diagram of embodiment 2 of a connection mechanism of the present application when a third component swings.
Fig. 16 is a stereoscopic structural diagram of a third component in embodiment 2 of a connection mechanism of the present application.
Fig. 17 is a stereoscopic structural diagram of a second component in embodiment 2 of a connection mechanism of the present application.
Fig. 18 is an assembly diagram of a second component and a third component in embodiment 2 of a connection mechanism of the present application.
Fig. 19 is an exploded view of embodiment 1 of a rotating shaft mechanism of the present application.
Fig. 20 is a cross-sectional view of embodiment 1 of a rotating shaft mechanism of the present application with a second component in a first position.
Fig. 21 is a cross-sectional view of embodiment 1 of a rotating shaft mechanism of the present application with a second component in a second position.
Fig. 22 is an assembly diagram of a first component and a second component in embodiment 2 of a rotating shaft mechanism of the present application after assembly.
Fig. 23 is an exploded view of Fig. 22.
Fig. 24 is a stereoscopic view of embodiment 2 of a rotating shaft mechanism of the present application at a view angle.
Fig. 25 is a stereoscopic view of embodiment 2 of a rotating shaft mechanism of the present application at another view angle.
Fig. 26 is a cross-sectional view of embodiment 2 of a rotating shaft mechanism of the present application, wherein a second component is in a first position.
Fig. 27 is a partial enlarged view Fig. 26.
Fig. 28 is a cross-sectional view of embodiment 2 of a rotating shaft mechanism of the present application, wherein a second component is in a first position.
Fig. 29 is another cross-sectional view of embodiment 2 of a rotating shaft mechanism of the present application.
Fig. 30 is yet another cross-sectional view of embodiment 2 of a rotating shaft mechanism of the present application.
Fig. 31 is an exploded view of embodiment 3 of a rotating shaft mechanism of the present application.
Fig. 32 is a cross-sectional view of embodiment 3 of a rotating shaft mechanism of the present application with a second component in a first position.
Fig. 33 is a cross-sectional view of embodiment 3 of a rotating shaft mechanism of the present application with a second component in a second position.
Fig. 34 is an exploded view of embodiment 4 of a rotating shaft mechanism of the present application.
Fig. 35 is a cross-sectional view of embodiment 4 of a rotating shaft mechanism of the present application with a second component in a first position.
Fig. 36 is a cross-sectional view of embodiment 4 of a rotating shaft mechanism of the present application with a second component in a second position.
Fig. 37 is an exploded view of embodiment 5 of a rotating shaft mechanism of the present application.
Fig. 38 is a cross-sectional view of embodiment 5 of a rotating shaft mechanism of the present application with a second component in a first position.
Fig. 39 is a cross-sectional view of embodiment 5 of a rotating shaft mechanism of the present application with a second component in a second position.
Fig. 40 is a structural diagram of glasses of the present application.
Fig. 41 is an exploded view of a first component and a spectacle frame of glasses of the present application.
Fig. 42 is a schematic view of arrangement of a data line of glasses of the present application.
Fig. 43 is an exploded view of partial structure of embodiment 1 of glasses of the present application.
Fig. 44 is a cross-sectional view of partial structure of embodiment 1 of glasses of the present application.
Fig. 45 is a partial stereoscopic structural diagram of embodiment 1 of glasses of the present application.
Fig. 46 is an exploded view of Fig. 45.
Fig. 47 is another partial stereoscopic structural diagram of embodiment 1 of glasses of the present application.
Fig. 48 is an exploded view of Fig. 47.
Fig. 49 is a cross-sectional view of embodiment 1 of glasses of the present application with a temple in an unfolded state.
Fig. 50 is a cross-sectional view of embodiment 1 of glasses of the present application with a temple in a folded state.
Fig. 51 is an exploded view of partial structure of embodiment 2 of glasses of the present application.
Fig. 52 is an assembly view of Fig. 51.
Fig. 53 is a structural diagram of Fig. 52 added with a data line.
Fig. 54 is a cross-sectional view of a third shaft and circlip position of embodiment 2 of glasses of the present application.
Fig. 55 is another form of cross-sectional view of a third shaft and circlip position of embodiment 2 of glasses of the present application.
Fig. 56 is a partial stereoscopic structural diagram of embodiment 2 of glasses of the present application.
Fig. 57 is an exploded view of Fig. 56.
Fig. 58 is a cross-sectional view of embodiment 2 of glasses of the present application with a temple in an unfolded state.
Fig. 59 is cross-sectional view of embodiment 2 of glasses of the present application with a temple in a folded state.
Fig. 60 is a schematic view of the optical imaging system of the AR glasses.

Reference numerals:
100 - first component; 101 - first abutting portion; 102 - cooperating portion; 103 - first lug plate; 104 - second lug plate; 105 - end plate; 106 - accommodating portion; 108 - upper limiting surface; and 109 - lower limiting surface;
200 - second component; 201 - first shaft; 202 - second abutting portion; 203 - pivot portion; 204 - spring base; 205 - shaft base; 206 - first protrusion; 207 - second protrusion; 210 - compression spring; 211 - first resilient rod; 212 - second resilient rod; 213 - elastic block; 214 - resilient piece; 215 - resilient piece group; and 217 - second tooth portion;
300 - third component; 301 - side wall; 302 - bottom wall; 303 - limiting portion; 304 - first tooth portion; 305 - second shaft; 306 - disc elastic piece; 307 - friction plate; 308 - first gap; 309 - second gap; 310 - protruding column; 311, 312 - projection;
400 - glasses; 401 - optical imaging system; 402 - image source assembly; 403 - optical assembly; 404 - spectacle frame; 405 - temple; 406 - fixing hole; 407 - screw; 408 - data line; 409 - folding hinge; 410 - hinge fixing seat; 411 - hinge portion; 412 - third shaft; 413 - through-hole; 414 - cutout; 415 - connector cover plate; 416 - temple cover plate; 417 - pin; 418 - circlip; 419 - washer; 420 - connection mechanism.

### DETAILED DESCRIPTION

In order to make the objects, technical solutions, and advantages of embodiments of the present application more apparent, the technical solutions in embodiments of the present application will be described clearly and completely in conjunction with the drawings in embodiments of the present application. Obviously, the described embodiments are only a part of the embodiments of the present application, and not all the embodiments. Based on the described embodiments of the present application, all other embodiments obtained by those of ordinary skill in the art without creative work shall fall into the protection scope of the present application.

Unless otherwise defined, technical or scientific terms used in the present application shall have ordinary meanings understood by those of ordinary skill in the art to which the present application pertains. The words "first", "second" and the like used in present application do not indicate any order, quantity or importance, but are only used to distinguish different components. The word "comprise" or "include" or the like means that an element or item appearing before such a word covers listed elements or items appearing after the word and equivalents thereof, and does not exclude other elements or items. The word "connect" or "interconnect" or the like is not limited to physical or mechanical connections, but may include electrical connections, regardless of direct or indirect connections. The words "up", "down", "left", "right" and the like are only used to indicate a relative positional relationship. When the absolute position of a described object changes, the relative positional relationship may also change accordingly.

To keep the following description of the embodiments of the present application clear and concise, detailed description of known functions and known components is omitted in the present application.

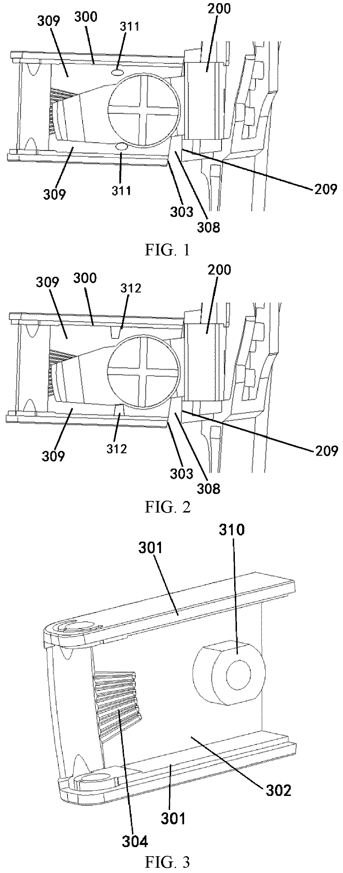

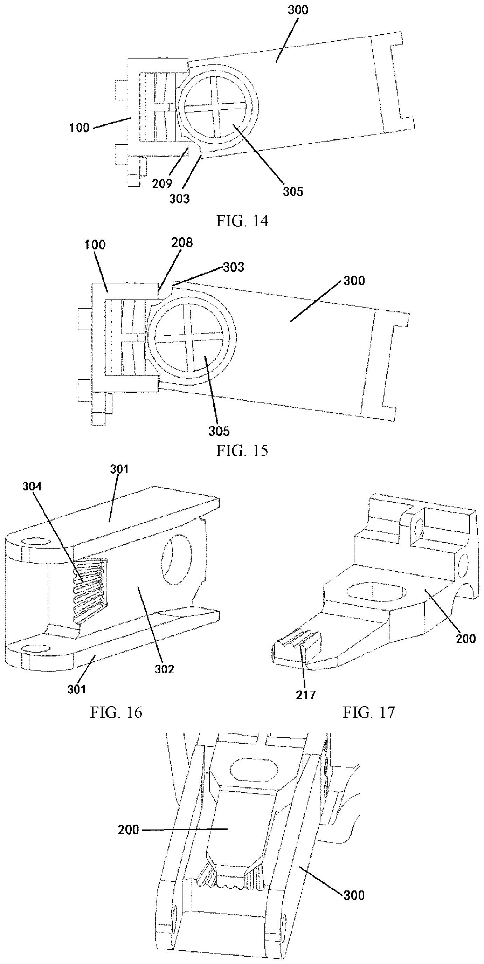

As shown in Figs. 1 to 18, embodiments of the present disclosure provide a connection mechanism for glasses. The glasses may include a spectacle frame that accommodates lenses, and temples. The connection mechanism includes a first component 100, a second component 200, and a third component 300. The first component 100 is configured to be connected to the spectacle frame. The second component 200 is rotatably connected to the first component 100 by a first shaft 201, and the second component 200 is capable of rotating relative to the first component 100 in a first direction. A third component 300 is configured to be connected to a temple. The third component is rotatably connected to the second component 200 by a second shaft 305, and the third component 300 is capable of rotating relative to the second component 200 in a second direction different from the first direction. An axial direction of the second shaft 305 is different from an axial direction of the first shaft 201. With the above structure, the temples can be splayed and tucked in the first direction and swing in the second direction.

The first direction and the second direction are both arc-shaped rotational directions, and the first direction and the second direction intersect in a cross-like manner. The rotation of the second component 200 relative to the first component 100 may be left-right splaying and tucking (i.e., outward splaying and inward tucking), and the rotation of the third component 300 relative to the second component 200 may be up-down swing. It may be appreciated that the spectacle frame may be defined to have a length direction and a width direction. When a user wears the glasses, the length direction of the spectacle frame is substantially same as an extension direction of a line connecting the user's left and right eyes, and the width direction of the spectacle frame is substantially same as an up-down direction of the user. Here, the "left-right" direction may be understood as the length direction of the spectacle frame, and the "up-down" direction may be understood as the width direction of the spectacle frame.

When the connection mechanism of embodiments of the present application is applied to the glasses, movements of the temples in two different directions can be implemented, i.e., the two temples of the glasses can be splayed outwards (flared outwards) to adapt to the head circumferences of different wearers, so as to improve the adaptability. Moreover, the two temples of the glasses may also swing up and down to implement up-down adjustment to adapt to the heights of the ears of different wearers and improve the use performance of the glasses.

It may be appreciated that the second component 200 and the third component 300 in embodiments of the present application may also be applied alone to the glasses independently of the first component, so that the temples of the glasses may swing up and down. In this example, the second component 200 may be connected to the spectacle frame by other components.

In an example, the present disclosure provides glasses, which may include a spectacle frame that accommodates lenses, shafts (e.g., second shafts), intermediate connectors (e.g., second components), and temples. The intermediate connectors are connected to the spectacle frame, and the temples may be rotatably connected to the intermediate connectors by the shafts. Axial directions of the rotating shafts extend substantially in the length direction of the spectacle frame. A first tooth portion may be provided on a component of the temple, and a second tooth portion adapted to the first tooth portion is provided on the intermediate connector. The first tooth portion and the second tooth portion are configured such that when the temple rotates relative to the intermediate connector, the first tooth portion and the second tooth portion are in spring contact and move relative to each other to provide rotational damping.

Optionally, in conjunction with Figs. 3 to 6 and Figs. 9 to 10, in addition to using the second shaft 305 as the shaft to rotatably connect the third component 300 to the second component 200, it is also possible that a protruding column 310 (which will be specifically described below) on the third component 300 is used as the shaft, and the protruding column 310 is connected to the third component 300 and passes through the second component 200. For example, the second component 200 is sleeved on the protruding column 310 and is capable of rotating about the protruding column 310. In an example, the protruding column 310 may extend from the third component 300, together forming one piece.

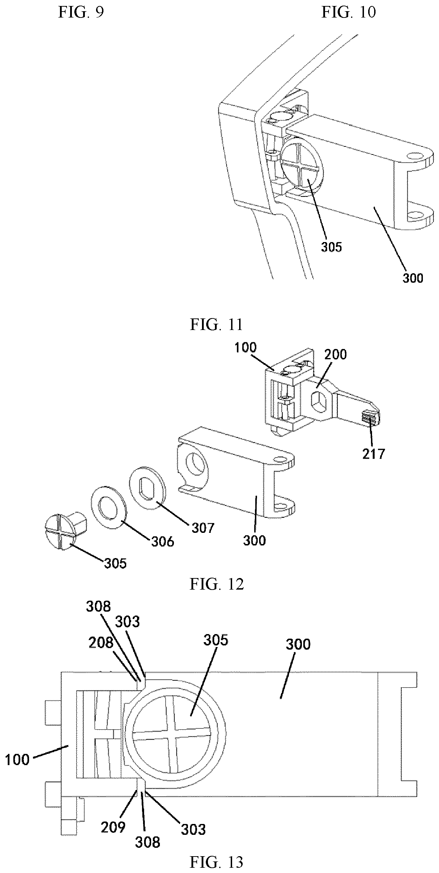

Optionally, in conjunction with Figs. 11 to 12, the second shaft 305 may be passed through the third component 300 and the second component 200, such that the third component 300 is rotatably connected with the second component 200, and the third component 300 is capable of rotating about the second shaft 305.

Optionally, a disc elastic piece 306 may be sleeved on the second shaft 305. The disc elastic piece 306 is configured to provide rotational damping to the third component 300.

The structure of the connecting structure of the present application is specifically described below in conjunction with different embodiments.

### Embodiment 1

The third component 300 has a limiting portion 303. The limiting portion 303 is configured to interact with the first component 100 or the second component 200 of the rotating shaft mechanism when the third component 300 rotates relative to the second component 200, to limit a rotation angle of the third component 300.

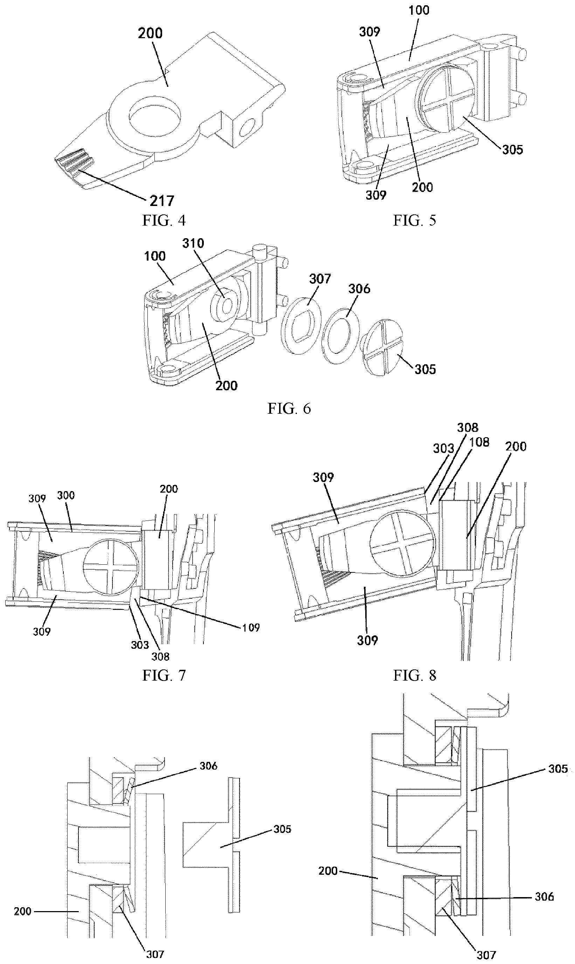

As shown in Figs. 7 and 8, one end of the third component 300 is opposite to the first component 100, and a first gap 308 is formed therebetween. The one end of the third component 300 is configured to interact with the first component 100 when the third component 300 rotates relative to the second component 200, to limit the rotation angle of the third component 300. The limiting portion 303 is formed on the one end of the third component 300.

As shown in Figs. 7 and 8, an upper limiting surface 108 and a lower limiting surface 109 are formed on an upper side and a lower side, respectively, of an end of the first component 100 facing the third component 300. The limiting portion 303 on the third component 300 includes an upper limiting portion and a lower limiting portion. The upper limiting surface 108 of the first component 100 and the upper limiting portion limit an angle of upward swing of the third component 300 (see Fig. 7), and the lower limiting surface 109 of the first component 100 and the lower limiting portion limit an angle of downward swing of the third component 300 (see Fig. 8).

Optionally, the first component 100 includes a first component body and a shaft connector connected to the first component body. The upper limiting surface and the lower limiting surface are formed on an upper side and a lower side, respectively, of an end of the shaft connector facing the third component 300 to limit a swing angle of the third component 300.

Further in conjunction with Figs. 1 to 8, the third component 300 includes a frame-shaped structure enclosed by two side walls 301 and a bottom wall 302, and the second component 200 is arranged in the frame-shaped structure. A second gap 309 is formed between the two side walls 301 and the second component 200. When the third component 300 rotates relative to the second component 200, the second component 200 is capable of acting with the two side walls 301 to limit the rotation angle of the third component 300. The two side walls 301 form the limiting portion 303. It should be noted that the second gap 309 illustrated in this embodiment is large, and is only schematic. If the size of the second gap 309 is adjusted or projections 311, 312 are provided in the second gap 309, when the third component 300 is rotated, the second component 200 will interfere with the two side walls 301 or the projections 311, 312 of the third component 300, thereby hindering further rotation of the third component 300. The second component 200 can limit the rotation of the third component 300, thereby limiting a rotation range of the third component 300.

For example, in an example shown in Fig. 1, the bottom wall 302 is provided with projections 311 at positions close to the two side walls 301, to define the second component 200 between the two projections 311, and to define a rotational displacement of the third component 300 and the second component 200 when the former rotates relative to the latter. Alternatively, for example, in an example shown in Fig. 2, the two side walls are provided with oppositely extending projections 312, to define a rotational displacement of the third component 300 and the second component 200 when the former rotates relative to the latter.

As shown in Figs. 3 to 8, the bottom wall 302 is provided with a first tooth portion 304, and the second component 200 is provided with a second tooth portion 217 adapted to the first tooth portion 304, and when the third component 300 rotates relative to the second component 200, the first tooth portion 304 and the second tooth portion 217 are in spring contact and move relative to each other to provide rotational damping. By providing the first tooth portion 304 and the second tooth portion 217 that engage with each other, a feel of discontinuity during rotation can be increased, and it may stop at an angle after rotation.

The second tooth portion 217 includes a plurality of teeth, with grooves being formed between adjacent teeth. The first tooth portion 304 may include a plurality of teeth (with grooves being formed between adjacent teeth) or may include a single tooth. When a connecting member 300 (third component) is in the position shown in Fig. 7, the first tooth portion 304 engages with a tooth of the second tooth portion 217 located at a lower position in the figure. When the connecting member 300 (third component) in the position shown in Fig. 8, the first tooth portion 304 engages a tooth of the second tooth portion 217 located at an upper position in the figure. That is, the first tooth portion 304 engages different teeth of the second tooth portion 217 when the connecting member 300 (the third component) rotates relative to the second component 200.

Optionally, in an example, the first tooth portion 304 and the second tooth portion 217 may be resilient, so that when the first tooth portion 304 moves relative to the second tooth portion 217, the first tooth portion 304 and the second tooth portion 217 elastically deform to enable the first tooth portion 304 to be clamped into different tooth grooves. In the absence of an external force, the connecting member 300 (third component) and the second component 200 are maintained in the position.

Optionally, the first tooth portion 304 on the bottom wall 302 is a tooth portion protruding from the bottom wall 302, and the second tooth portion 217 of the second component 200 is a tooth portion arranged in a recess of the second component 200 to save space.

Further in conjunction with Fig. 5, the bottom wall 302 is provided with a protruding column 310 located in the frame-shaped structure, and the second component 200 is arranged in the frame-shaped structure, and the protruding column 310 is passed through the second component 200. In this embodiment, the protruding column 310 may replace the second shaft 305 to act as the shaft. The protruding column 310 is fixed relative to the third component 300. The second component 200 is sleeved on the protruding column 310 and is capable of rotating about the protruding column 310, so that the third component 300 is rotatably connected to the second component 200 by means of the protruding column 310. The protruding column 310 may have a center hole, and a pin shaft 305 is mounted in the center hole of the protruding column 310. A disc elastic piece 306 is pressed between the protruding column 310 (second shaft) and the head of the pin shaft 305. In this way, the pin shaft 305 as a whole, including the head, may be disposed in the frame of the third component 300, which can improve the aesthetics of the product, protect the pin and accessories, and prolong the service life.

As shown in Figs. 3, 4, and 6, an end of the protruding column 310 is in an elongate cylindrical shape, a hole in the second component 200 corresponding to the end of the protruding column 310 is a circular hole, and the center hole in the protruding column 310 of the third component 300 is a circular hole. That is, the pin shaft 305 and the second component 200 are kept relatively stationary (they are fixed), and the second component 200 may be rotated around the protruding column 310 relative to the third component 300 to achieve the function of up and down swinging of the third component 300. Furthermore, a friction plate 307 may also be sleeved on the protruding column 310 (second shaft). The friction plate 307 is disposed between the protruding column 310 and the disc elastic piece 306.

The disc elastic piece 306 has elasticity, and has a curved surface in its initial shape (see Fig. 9). When the pin shaft 305 is mounted into the corresponding hole of the second component 200, the disc elastic piece 306 is squeezed and forced to deform into a flat surface (see Fig. 10). The pin shaft 305 and the corresponding hole of the second component 200 may be in interference fit to ensure that the pin shaft 305 is not pushed out due to a resilience force of the disc elastic piece 306. The pin shaft 305 and the second component 200 may also be fixed by riveting, welding, or the like, which may also ensure that the pin shaft is not pushed out due to the resilience force of the disc elastic piece 306. In this case, a feel of damping during rotation is provided since the disc elastic piece 306 is always squeezed.

Optionally, in an example, when the third component 300 and the second component 200 rotate relative to each other, the first tooth portion 304 and the second tooth portion 217 also move relative to each other. When highest points of the two tooth portions come into contact, the second component 200 is forced to move slightly outwardly (away from the bottom wall 302) along an axial direction of the protruding column 310, and when lowest points of the two tooth portions comes into contact, the second component 200 moves slightly inwardly (closer to the bottom wall 302) along the axial direction of the protruding column 310. Since the disc elastic piece 306 is sleeved on the second component 200, when the third component 300 rotates relative to the second component 200, the first tooth portion 304 and the second tooth portion 217 can elastically contact each other under the deformation of the disc elastic piece 306.

A damping shaft is formed by cooperation of the pin shaft 305 and the disc elastic piece 306. The damping shaft provides a feel of stepless damping. The cooperation of the first tooth portion 304 and the second tooth portion 217 provides a feel of stepped damping. The damping shaft and the tooth portions may be both provided, or only the tooth portions may be provided without the damping shaft, or only the damping shaft may be provided without the tooth portions.

### Embodiment 2

As shown in Figs. 11 to 18, Embodiment 2 differs from Embodiment 1 in that the second shaft (pin shaft 305) is connected to the second component 200 after being passed through the third component 300 from the outer side of the third component 300. The second shaft (protruding column 310) in Embodiment 1 is passed through the second component 200 and the third component 300 from the inner side of the third component 300. Structures of other parts in Embodiment 2 are substantially same as those in Embodiment 1, and are not described here.

An end of the pin shaft 305 is in an elongate cylindrical shape, a hole in the second component 200 corresponding to the end of the pin shaft is an elongate circular hole matched therewith, and the center hole in the protruding column 310 of the third component 300 is a circular hole. That is, the pin shaft 305 and the second component 200 are kept relative stationary (they are fixed), and the third component 300 may be rotated around the pin shaft 305 relative to the second component 200 to achieve the function of up and down swinging of the third component 300. Furthermore, a friction plate 307 may also be sleeved on the pin shaft 305. The friction plate 307 is disposed between the pin shaft 305 and the disc elastic piece 306.

In this embodiment, the pin shaft 305 may be the second shaft 305. The pin shaft 305 may be passed through the third component 300 and the second component 200 and fixed to the second component 200, such that the third component 300 is connection with the second component 200 rotatably around the pin shaft 305, and the third component 300 is capable of rotating around the second shaft 305 relative to the second component 200.

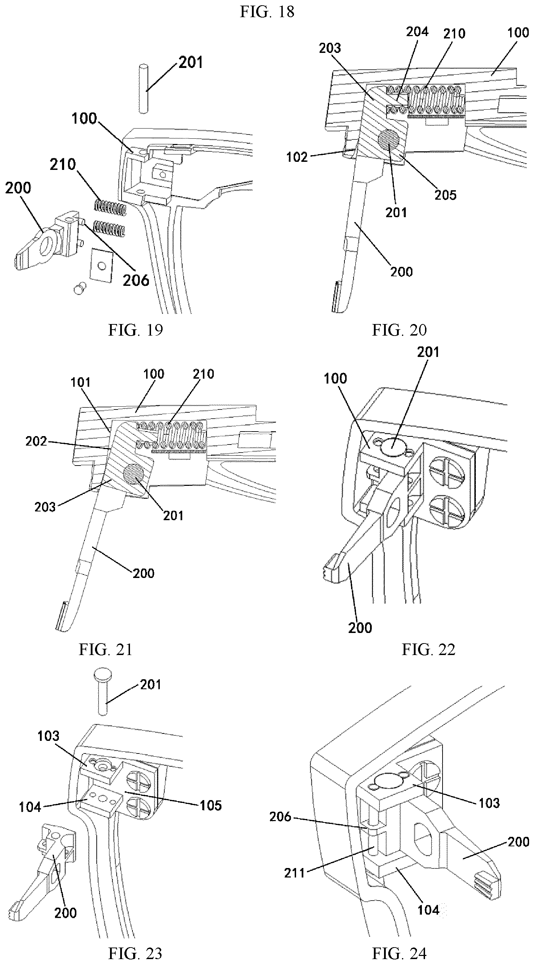

Embodiments of the present disclosure also provide a rotating shaft mechanism. For example, as shown in Figs. 19 to 41, a first component and a second component are mounted together by a first shaft 201 to cooperatively form the rotating shaft mechanism. The rotating shaft mechanism may include a first shaft 201, a first component 100, a second component 200, and a cooperating portion 102. The first component 100 has a first abutting portion 101. The second component 200 has a second abutting portion 202. The second component 200 is rotatably connected to the first component 100 by the first shaft 201, and the second component 200 is rotatable relative to the first component 100 in a preset angular range, and the second component 200 has a first position and a second position. Optionally, the first component 100 or the second component 200 includes a cooperating portion 102. In the case where the cooperating portion 102 is formed on the first component 100, the cooperating portion 102 adjoins the first abutting portion 101, with a first included angle a being formed therebetween. In the case where the cooperating portion 102 is formed on the second component 200, the cooperating portion 102 adjoins the second abutting portion 202, with a second included angle β being formed therebetween. Optionally, the first included angle a and the second included angle β define a rotation angle range of the second component 200 relative to the first component 100. That is, in the case where the cooperating portion 102 is formed on the first component 100, a preset angle range is from 0° to 180° minus α; and in the case where the cooperating portion 102 is formed on the second component 200, a preset angle range is from 0° to 180° minus β. The values of α and β may be determined according to the field and product to which the rotating shaft mechanism is applied actually, as well as the rotation angle required actually. Furthermore, α and β may be equal or unequal.

For example, the cooperating portion 102 adjoins the first abutting portion 101 (or the second abutting portion 202), which means that the cooperating portion 102 and the first abutting portion 101 (or the second abutting portion 202) may be provided on a same component, and the two portions extend continuously, or that they may be provided on different components, and the two portions extend continuously. It may be appreciated that the cooperating portion 102 may also be spaced apart from the first abutting portion 101 (or the second abutting portion 202).

By way of example, the rotating shaft mechanism may be applied to glasses. A temple 405 of the glasses is connected to the second component 200, and a spectacle frame 404 of the glasses is connected to the first component 100. The second component 200 can cause the temple 405 to rotate relative to the first component 100 and the spectacle frame 404, to implement outward splaying of the temple 405, so that the glasses can be adapted to the head circumferences of different wearers and are convenient to wear. For example, if the temple 405 needs to be splayed outwards by 10° to 15°, the first included angle and the second included angle may be set to 165° to 170°, respectively.

It may be appreciated that the rotating shaft mechanism in embodiments of the present disclosure may be applied alone to glasses, so that temples of the glasses may be further flared outwards after being unfolded. The rotating shaft mechanism of embodiments of the present disclosure may also, together with the third component in the above embodiment, form a connection mechanism to be applied to glasses, so that temples of the glasses can swing up and down in addition to being further flared outwards after being unfolded.

In an example, the present disclosure provides glasses, which may include a spectacle frame that accommodates lenses, and temples. The spectacle frame itself may be configured as a first component, a second component is rotatably connected to the spectacle frame by a rotating shaft, and a temple is connected to the spectacle frame by the second component. The spectacle frame is provided with a first flat surface on an inner side wall of the spectacle frame, and an inclined surface at an included angle with respect to the first flat surface. The second component is provided with a second flat surface, which includes a first portion corresponding to the first flat surface and a second portion corresponding to the inclined surface. The second component is rotatable, by means of the rotating shaft, relative to the spectacle frame between a first position and a second position. In the first position, the first flat surface is fitted to the first portion of the second flat surface. In the second position, the inclined surface is fitted to the second portion of the second flat surface.

In the case where a cooperating portion 102 is formed on the first component 100, when the second component 200 is in the first position, a first abutting portion 101 interacts with a second abutting portion 202 to maintain the second component 200 in the first position. In the case where a cooperating portion 102 is formed on the first component 100, when the second component 200 is in the second position, the cooperating portion 102 interacts with a second abutting portion 202 to maintain the second component 200 in the second position. In the case where a cooperating portion 102 is formed on the second component 200, when the second component 200 is in the first position, a first abutting portion 101 interacts with a second abutting portion 202 to maintain the second component 200 in the first position. In the case where a cooperating portion 102 is formed on the second component 200, when the second component 200 is in the second position, a first abutting portion 101 interacts with the cooperating portion 102 to maintain the second component 200 in the second position.

According to the rotating shaft mechanism in embodiments of the present application, by providing a cooperating portion on the first component 100 or the second component 200, and providing abutting portions on the first component 100 and the second component 200, respectively, the second component 200 is capable of rotating relative to the first component 100, and switching between interaction of the cooperating portion and an abutting portion and interaction of the abutting portions in the rotation, so that the second component 200 can be maintained in the first position or the second position after the rotation, thereby implementing adjustment of an angle between the first component 100 and the second component 200.

Optionally, inclined surfaces may be provided on the first component 100 and the second component 200, and flat surfaces may be provided on the first component 100 and the second component 200, respectively, so that the second component 200 is capable of rotating relative to the first component 100, and switching between interaction of an inclined surface and a flat surface (e.g., an inclined surface is fitted to a flat surface) and interaction of the flat surfaces (e.g., one flat surface is fitted to the other) during the rotation. It may be appreciated that both the terms "flat surface" and "inclined surface" mentioned above may have a substantially flat surface, and the term "inclined surface" is so named due to an angle relative to the term "flat surface". Optionally, the cooperating portion may also be a structure having a curved surface, a recess, or a projection, etc., and the abutting portion may also be a structure having a curved surface, a recess, or a projection, etc.

In an example, the first abutting portion is the first flat surface, the second abutting portion is the second flat surface, and the cooperating portion may be configured in one of the following arrangements: the first component includes the cooperating portion, which is an inclined surface at the first included angle with respect to the first flat surface, wherein the first flat surface is fitted to the second flat surface when the second component is in the first position, and the inclined surface is fitted to the second flat surface when the second component is in the second position. The second component includes the cooperating portion, which is an inclined surface at the second included angle with respect to the second flat surface, the first flat surface is fitted to the second flat surface when the second component is in the first position, and the inclined surface is fitted to the first flat surface when the second component is in the second position.

Optionally, the first abutting portion, the second abutting portion, and the cooperating portion may be provided at a location between the first component and the second component and blocked by the first component and/or the second component so as not to be readily observable from the outside.

In some embodiments, the rotating shaft mechanism may further include an elastic element, which is arranged between the first component 100 and the second component 200 and configured to provide a resetting force for the second component 200 to rotate from the second position toward the first position, so that the second component 200 can be reset from the second position to the first position in the absence of an external force.

The specific structure, arrangement position and mode of action of the elastic element are not specifically limited in the present application, so long as it can provide a resetting force for the second component 200 to rotate from the second position toward the first position. In an example, the elastic element may be an elastomer, which may be deformable in a direction perpendicular to an axial direction of the first shaft 201 to provide a resetting force for the second component 200 to rotate from the second position toward the first position, such as providing the above-mentioned resetting force in a direction substantially perpendicular to the axial direction of the first shaft 201.

For example, in the embodiment in which the rotating shaft mechanism described above is applied to glasses, when no external force is applied to the glasses, the second component 200 is in the first position, and temples 405 of the glasses may be understood to be in a non-splayed state. In order to ensure that each temple 405 can be maintained in the first position stably, the elastic element may be deformable to some extent so as to apply a certain force to the second component 200. When an external force is applied to the glasses, causing the temples 405 to be splayed outwards, a relative distance between the two temples 405 increases to adapt to the head circumferences of different users. As each temple 405 is splayed outwards, the second component 200 rotates around the first shaft 201 relative to the first component 100, and the second component 200 causes the elastic element to continue to deform until the second component 200 rotates to the second position. Since the cooperating portion 102 interacts with the first abutting portion 101 or the second abutting portion 202, the second component 200 is limited to the second position and cannot continue to rotate, the deformation of the elastic element reaches a maximum amount, and the temple 405 is accordingly splayed outwards to a maximum extent. After the second component 200 leaves the first position, whether in a position between the first position and the second position or in the second position, the elastic element is capable of applying a force to the second component 200 under the effect of deformation, so that the second component 200 can be reset from the second position to the first position in the absence of an external force.

Although the change of the elastic element during rotation of the second component 200 is described above using glasses as an example, it may be appreciated that it may be understood similarly in the case where the above-mentioned rotating shaft mechanism is used in any other apparatus.

The specific structure of the rotating shaft mechanism of the present application is described below in different embodiments. It should be noted that hereinbelow, for convenience of description, when the second component 200 rotates from the first position to the second position, it is meant to be splayed outwards, and when the second component 200 rotates from the second position to the first position, it is meant to be reset. Furthermore, the terms "up", "down", "left", and "right" are meant for locations in the drawings.

### Embodiment 1

As shown in Figs. 19 to 21, the cooperating portion 102 in Embodiment 1 is formed on the first component 100. One end of the elastic element abuts against a portion, of the second component 200, that is configured to interact with the first abutting portion 101 of the first component 100, and the other end of the elastic element abuts against a portion of the first component 100 opposite to the first abutting portion 101. The first shaft 201 is more adjacent to the cooperating portion 102 relative to the elastic element.

Further in conjunction with Figs. 19 to 21, the elastic element includes a compression spring 210. The compression spring 210 is retractable in a direction substantially perpendicular to an axial direction of the first shaft 201. It may be appreciated that other types of elastic elements different from the compression spring 210 may also be used in this embodiment. The second component 200 includes a pivot portion 203. The second abutting portion 202 is located on a first side of the pivot portion 203. A portion of a second side of the pivot portion 203 corresponding to the first abutting portion 101 of the first component 100 is provided with a spring base 204. One end of the compression spring 210 is positioned on the spring base 204. A portion of the second side of the pivot portion 203 corresponding to the cooperating portion 102 of the first component 100 includes a shaft base 205. The first shaft 201 is passed through the shaft base 205.

For example, an outer side wall, a front side wall, and an inner side wall of the first component 100 in Figs. 20 and 21 define an accommodating cavity. An upper portion of the left side wall 301 (i.e., the outer side wall) defining the accommodating cavity forms the first abutting portion 101, and a lower portion of the left side wall 301 is inclined outwardly and forms the cooperating portion 102. In this example, the first abutting portion 101 may be a flat surface, and in contrast, the cooperating portion 102 may be an inclined surface. An upper portion of the second component 200 forms the pivot portion 203. A left side of the pivot portion 203 (which is adjacent to the left side wall 301, and may also be understood as a side facing the left side wall 301) is the first side and forms the second abutting portion 202. The second abutting portion 202 corresponds to both the first abutting portion 101 and the cooperating portion 102. In this example, the second abutting portion 202 may be a flat surface. The second side of the pivot portion 203 faces away from the first abutting portion 101, and may be referred to as a right side. An upper portion of the right side of the pivot portion 203 is concave to form a recess, and the spring base 204 is disposed in the recess. The spring base 204 in this embodiment may be a protruding column, and one end of the compression spring 210 may be sleeved on the protruding column. A lower portion of the right side of the pivot portion 203 (a portion away from the front side wall) forms a protrusion with respect to its upper portion. The protrusion serves as the shaft base 205 for the first shaft 201, and the first shaft 201 is passed through the shaft base 205. Thus, the first shaft 201 is more adjacent to the cooperating portion 102 relative to the compression spring 210 (elastic element), which facilitates force application by the compression spring 210 to provide a resetting force for the second component 200 to rotate from the second position towards the first position.

A plurality of, such as two, compression springs 210 may be provided in parallel to provide a stable and balanced resetting force for the second component 200.

As shown in Fig. 20, when the second component 200 is in the first position, the compression spring 210 applies to the second component 200 an acting force that causes the second component to abut against the first component 100, such that the second abutting portion 202 of the second component 200 is fitted to the first abutting portion 101 of the first component 100 and the second component can be maintained in the first position. When the second component 200 is applied a force that causes it to be splayed outwards to the left side (outwards) of the figure, the second component 200 rotates until its second abutting portion 202 is fitted to the cooperating portion 102 on the first component 100, referring to Fig. 21, and the compression spring 210 is still in a compressed state, and applies an acting force to the second component 200, such that the second component has a tendency to be reset from the second position to the first position.

### Embodiment 2

As shown in Figs. 22 to 30, the cooperating portion 102 is formed on the second component 200. The elastic element includes resilient rods which are located on two opposite sides of the first shaft 201. The resilient rods pass through the second component 200, respectively. When the second component 200 switches from the first position to the second position, the resilient rods located on different sides of the first shaft 201 elastically deform in opposite directions. The resilient rods that elastically deform in opposite directions are used to provide a resetting force for the second component 200 to rotate from the second position toward the first position.

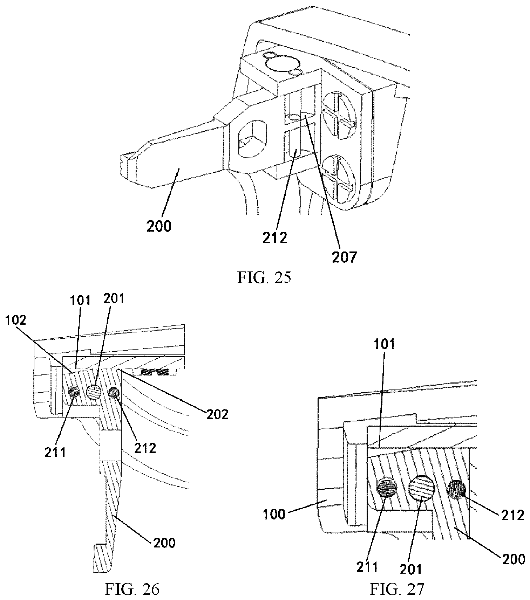

For example, as shown in Figs. 24 and 25, the second component 200 includes a first protrusion 206 located on a first side thereof and a second protrusion 207 located on a second side thereof. The resilient rods include a first resilient rod 211 and a second resilient rod 212. The first resilient rod 211 is passed through the first protrusion 206 and is fixed at two ends to the first component 100. The second resilient rod 212 is passed through the second protrusion 207 and is fixed at two ends to the first component 100.

Further in conjunction with Figs. 24 and 25, the first component 100 includes a first lug plate 103 and a second lug plate 104 which are disposed oppositely in an up-down direction. The first shaft 201 is passed through the second component 200 and is connected at two ends to the two lug plates. The two ends of the two resilient rods are respectively fixed to the two lug plates.

As shown in Fig. 22, the first component 100 further includes an end plate 105, with the two lug plates being provided on a plate surface (surface) of the end plate 105, the plate surface forming the first abutting portion 101. One end of the second component 200 faces the plate surface and forms the second abutting portion 202. The first shaft 201 is parallel to the first abutting portion 101 and the second abutting portion 202. The first resilient rod 211 and the second resilient rod 212 in a non-deformed state (when the second component 200 is in the first position) are both parallel to the first shaft 201.

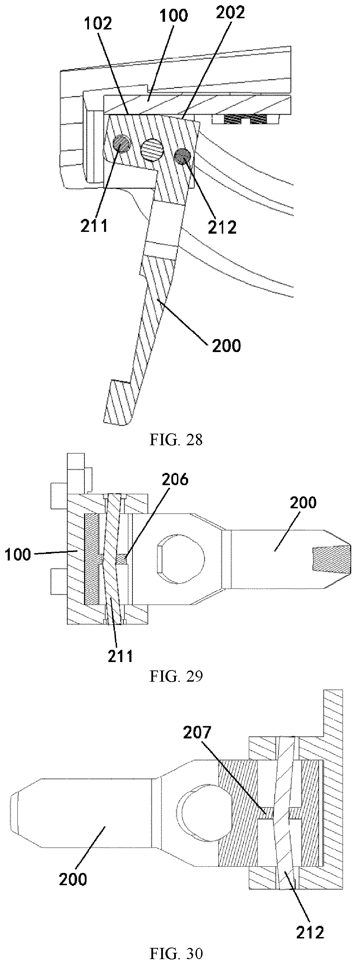

As shown in Figs. 26 to 28, when the second component 200 rotates from the first position in Figs. 26 and 27 to the second position in Fig. 28, i.e., when the second component 200 rotates to the left side (outwards) shown in Figs. 26 and 28, the first protrusion 206 and the second protrusion 207 of the second component 200 respectively cause the resilient rods passed through to elastically deform. The first protrusion 206 located on the left side (outer side) in Figs. 26 and 28 causes the first resilient rod 211 located on the left side to elastically deform toward the upper side shown in the figures (in the case the rotating shaft mechanism is applied to smart glasses, the first resilient rod 211 deforms toward a front spectacle frame of the glasses). The second protrusion 207 located on the right side (inner side) in Figs. 26 and 28 causes the second resilient rod 212 located on the right side to elastically deform toward the lower side shown in the figures (in the case the rotating shaft mechanism is applied to smart glasses, the first resilient rod 211 deforms away from a front spectacle frame). The resilient rods, due to the characteristic of restoration after deformation, implement a resilience force when the second component 200 is splayed outwards.

### Embodiment 3

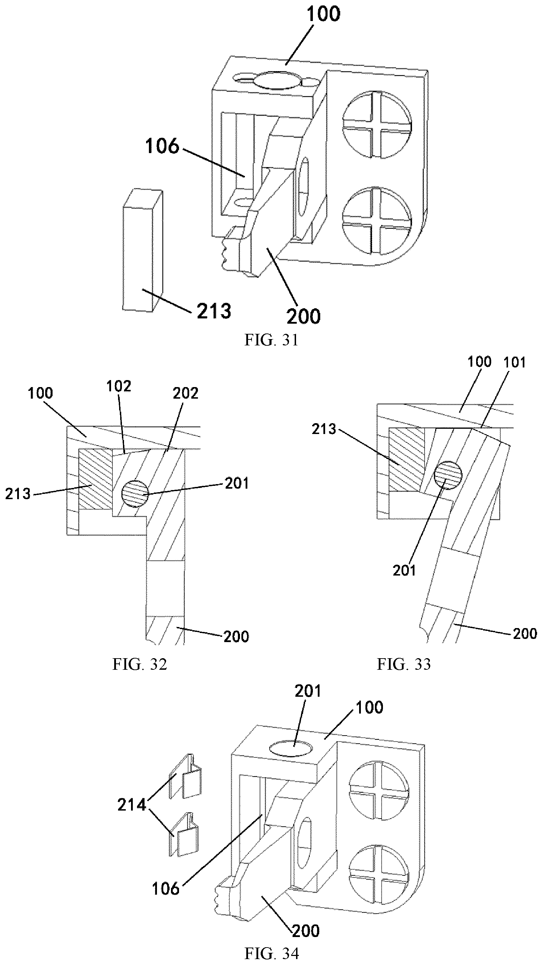

As shown in Figs. 31 to 33, the cooperating portion 102 is formed on the second component 200. The first component 100 and the second component 200 define an accommodating portion 106. The elastic element is an elastic block 213. The elastic block 213 is arranged in the accommodating portion 106 and buts against both the first component 100 and the second component 200. When the second component 200 rotates from the first position to the second position, i.e., when it is splayed outwards toward the left side in the figures until being located in the second position, the second component 200 squeezes the elastic blocks 213 such that it elastically deforms (see Fig. 33) and accumulates elastic potential energy, thereby obtaining a resilience force to provide a resetting force for the second component 200 to rotate from the second position toward the first position. That is, the force for resetting the second component 200 from the second position to the first position may be obtained by the resilience force of the elastic block 213.

Further in conjunction with Fig. 31, the first component 100 has an accommodating cavity. One end of the second component 200 extends into the accommodating cavity, and the accommodating portion 106 is formed between the second component and a left side wall 301 (outer side wall) of the accommodating cavity. An end face of the end of the second component 200 extending into the accommodating cavity forms the second abutting portion 202. A surface of the first component 100 opposite to the second abutting portion 202 forms the first abutting portion 101 and the cooperating portion 102. That is, the bottom defining the accommodating cavity forms the first abutting portion 101 and the cooperating portion 102. A first side of the elastic block 213 is fitted to a side surface of the second component 200 located in the accommodating portion 106, and a second side of the elastic block 213 is fitted to a surface of a side wall 301 defining the accommodating cavity opposite to the side surface of the second component 200. To fix the elastic block 213, the elastic block 213 may be adhered to the surface of the side wall 301 of the accommodating cavity.

### Embodiment 4

As shown in Figs. 34 to 36, Embodiment 4 differs from Embodiment 3 only in that the elastic block 213 is replaced with a resilient piece 214. The resilient piece 214 is arranged in the accommodating portion 106. When the second component 200 is in the second position, the resilient piece 214 deforms to provide a resetting force for the second component 200 to rotate from the second position toward the first position.

In embodiment 4, the resilience force by outward splaying of the second component 200 may be implemented by the resilient piece 214. The resilient piece 214 may be fixed to the side wall 301 of the accommodating portion 106 of the first component 100 by adhering or welding. The second component 200, when rotating outwards, compresses the resilient piece 214 to obtain the resilience force.

### Embodiment 5

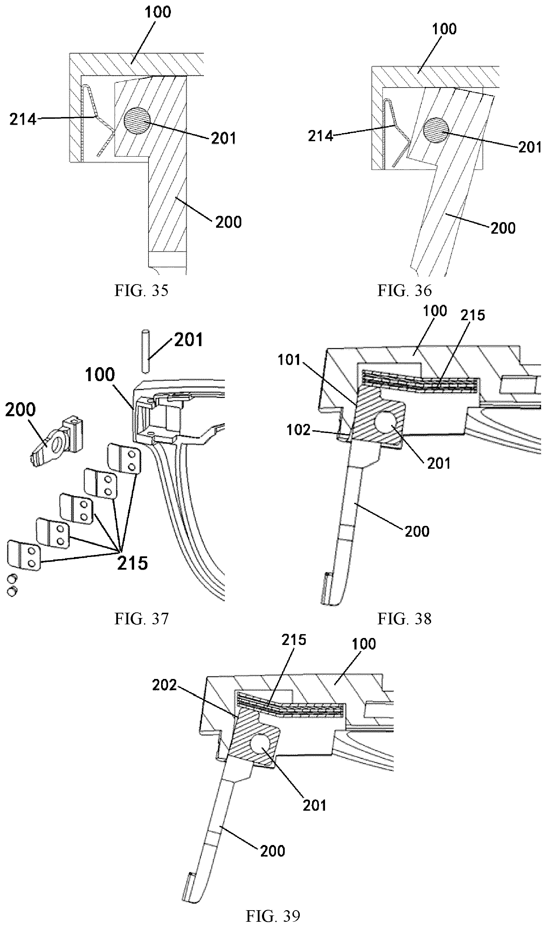

As shown in Figs. 37 to 39, the elastic element includes a resilient piece group 215 formed by a plurality of resilient pieces stacked successively on top of each other. The resilient piece group 215 acts on an end face of the second component 200 adjacent to the second abutting portion 202. When the second component 200 is in the second position, the resilient piece group 215 deforms to provide a resetting force for the second component 200 to rotate from the second position toward the first position.

Further in conjunction with Figs. 37 to 39, the first component 100 has an accommodating cavity. An upper portion of a left side wall 301 defining the accommodating cavity forms the first abutting portion 101, and a lower portion of the left side wall 301 defining the accommodating cavity forms the cooperating portion 102 that is inclined outwardly. A first end of the second component 200 extends into the accommodating cavity, and the resilient piece group 215 is located between the first end of the second component 200 and an upper side wall 301 defining the accommodating cavity. The plurality of resilient pieces are stacked successively from top to bottom. A side of the first end of the second component 200 adjacent to the left side wall 301 defining the accommodating cavity protrudes from its side that is away from the left side wall 301 defining the accommodating cavity to form a projection, and the resilient piece group 215 acts on an end face of the projection. The first shaft 201 is located below the projection and as far as possible from the left side wall 301 defining the accommodating cavity to facilitate the resilient piece group 215 providing an acting force for resetting the second component 200 from the second position toward the first position. In order to leave space for the resilient piece group 215 to deform, the top side wall defining the accommodating cavity defines a depression to allow deformation of a free end of the resilient piece group 215 (an end surface acting on the projection), and the top side wall defining the accommodating cavity is also provided with a mounting portion to fix a fixed end of the resilient piece group.

The first component 100 in each of the above embodiments may include a first component body and a shaft connector. The shaft connector and the first component body may be one piece. Alternatively, the shaft connector is connected to the first component body. The first abutting portion 101 is formed on the shaft connector, and the second component 200 is rotatably connected to the shaft connector by the first shaft 201.

All the elastic elements in the above embodiments may provide a pre-tightening force so that the second component 200 is not liable to rotate. It should be noted that if the resilient rod in embodiment 2 provides a pre-tightening force, upper, middle and lower points of the resilient rod should not be co-axial, i.e., the holes in the first lug plate 103 and the second lug plate 104 for fixing the resilient rod and the hole in the projection through which the resilient rod is passed should not be co-axial, in order to provide the pre-tightening force in advance.

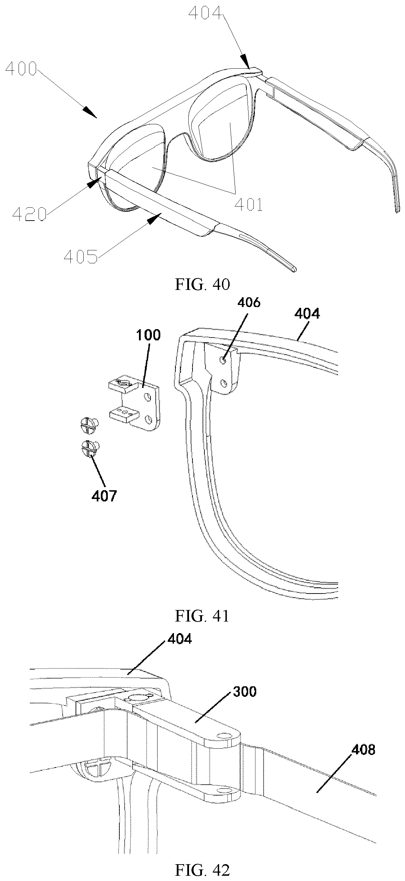

As shown in Figs. 40 to 59, embodiments of the present disclosure also provide glasses 400. The glasses 400 include a spectacle frame 404 and temples 405. The glasses 400 further includes a rotating shaft mechanism in any of the above embodiments; or the glasses 400 further includes a connection mechanism 420 for glasses in any of the above embodiments. The spectacle frame 404 and the temples 405 are connected by a rotating shaft mechanism or a connection mechanism 420.

In the case where the glasses 400 include a rotating shaft mechanism, two sets of rotating shaft mechanisms are included. First components 100 of the two sets of rotating shaft mechanisms are fixed to the spectacle frame 404, respectively, and the two temples 405 are respectively hinged to the second component 200 of the two sets of rotating shaft mechanisms. As the second components 200 are capable of rotating left and right relative to the first components 100, the two temples 405 connected to the second components 200 can be flared outwards, thereby adjusting the distance between the two temples 405 to adapt to the head circumferences of different wearers. In addition, as the temples 405 are hinged with the second components 200, the temples 405 can be folded to facilitate storage.

In the case where the glasses 400 include a connection mechanism 420, two sets of connection mechanisms 420 are included. First components 100 of the two sets of connection mechanisms 420 are fixed to the spectacle frame 404, respectively, and the two temples 405 are respectively hinged to third components 300 of the two sets of connection mechanisms 420. As second components 200 are capable of rotating left and right relative to the first components 100, the two temples 405 can be flared outwards, thereby adjusting the distance between the two temples 405 to adapt to the head circumferences of different wearers. As the third components 300 are capable of rotating up and down relative to the second components 200, the two temples 405 can be adjusted up and down to adapt to the heights of the ears of different wearers. In addition, as the temples 405 are hinged with the third components 300, the temples 405 can be folded to facilitate storage. The glasses 400 of embodiments of the present application are highly applicable and convenient to wear, and bring a good user experience.

As shown in Fig. 41, the spectacle frame 404 of the glasses 400 and the first component 100 may be separate structures. The spectacle frame 404 may be provided with fixing holes 406, and the first component 100 may be fixed to the spectacle frame 404 by means of connectors such as screws 407. Of course, the spectacle frame 404 may also be used directly as the first component 100; or the spectacle frame 404 is used as part of the first component 100; or the spectacle frame 404 and the first component 100 are one piece. The spectacle frame 404 may be made of a plastic material such as ABS\PC. In order to ensure abrasion resistance and fatigue resistance during rotation, the first component 100 may be made of aluminum alloy or stainless steel or paraformaldehyde POM. In the case where the spectacle frame 404 and the first component 100 are one piece, both may be made of a metal material and directly molded integrally to facilitate assembly.

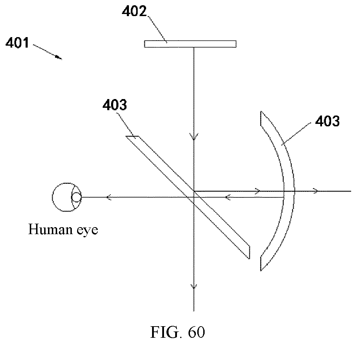

As shown in Fig. 40, the glasses 400 are smart glasses, and the smart glasses further include an optical imaging system 401. As shown in Fig. 60, the optical imaging system 401 includes an image source assembly 402 and an optical assembly 403. The smart glasses may be a head-mounted display device such as AR glasses or VR glasses. The image source assembly 402 is configured to display images to be projected into human eyes, and the optical assembly 403 functions to change optical paths and the like.

The mode of connection between the temple 405 and the third component 300 and the arrangement of a data line 408 are described below in connection with different embodiments.

### Embodiment 1

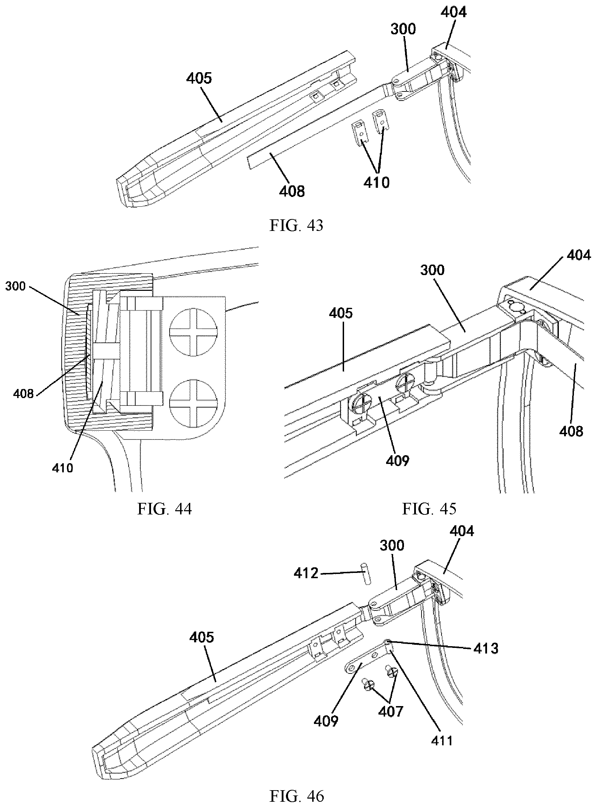

In the case where the glasses 400 are smart glasses, a spectacle frame 404 (display body) and temples 405 of the smart glasses are typically connected by a data line 408. As shown in Figs. 42 and 43, the data line 408 extends from the display body, passes through a third component 300, and extends to a temple 405. As shown in Fig. 43, 45, and 46, the glasses 400 further include a folding hinge 409 and a hinge fixing seat 410. The hinge fixing seat 410 is fixed to the inner side of the temple 405. To facilitate disassembly, the hinge fixing seat 410 may be snap-fitted to the temple 405 and fixed by a clamping buckle. One end of the folding hinge 409 is rotatably connected to the third component 300, and the other end thereof is fixed to the hinge fixing seat 410, so that the temple 405 can rotate relative to the third component 300. The temple 405 is hinged with the third component 300 by means of the folding hinge 409, such that the temple 405 can be folded and unfolded, and the temple 405 is convenient to store and carry after being folded.

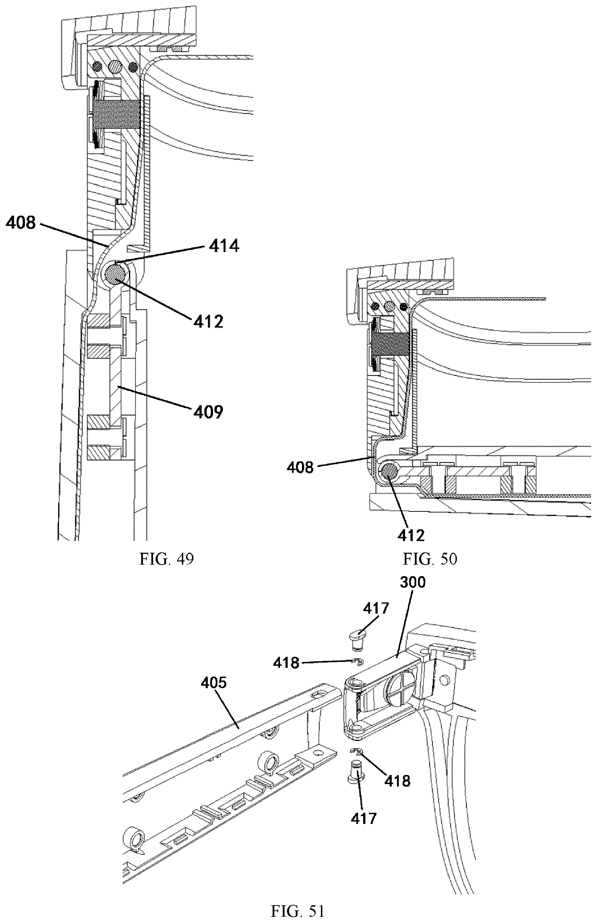

Further in conjunction with Fig. 46, the folding hinge 409 includes a hinge portion 411 and a third shaft 412. The hinge portion 411 has a through hole 413, and a cutout 414 that runs through two axial ends thereof and is communicated with the through hole 413 (see Fig. 49). The third shaft 412 is passed through the through hole 413 and in close fit with the through hole 413 to provide rotational damping for the folding hinge 409.

Further referring to Figs. 45 and 46, a portion of the data line 408 that extends inside the temple 405 may be fixed in the temple 405 by the hinge fixing seat 410. That is, the data line 408 is positioned between the temple 405 and the hinge fixing seat 410. Two hinge fixing seats 410 may be arranged in parallel in this Embodiment 1. The folding hinge 409 is assembled and fixed to the two hinge fixing seats 410 by two screws respectively to prevent the folding hinge 409 from turning and improve stability.

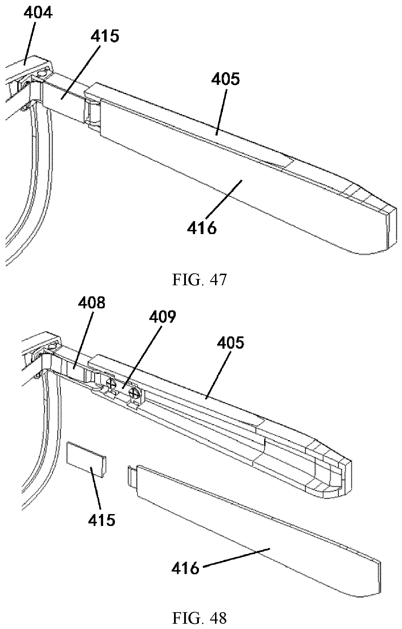

As shown in Figs. 47 and 48, the glasses 400 further include a connector cover plate 415 and a temple cover plate 416. The connector cover plate 415 is provided on the third component 300 to cover a data line 408 passing through the third component 300. The temple cover plate 416 is provided on the temple 405 to cover the data line 408 in the temple 405. The cover plate may be fixed to the third component 300 or the temple 405 by gluing or snap-fitting. The connector cover plate 415 and the temple cover plate 416 are flexibly connected at opposing ends so as to be capable of rotating relative to each other, and with the folding of the temple 405, a connection part between the connecting cover plate and the temple cover plate 416 can also be bent accordingly, so as not to hinder the folding of the temple 405. The so-called flexible connection is relative to a rigid connection. The flexible connection means being capable of rotating at the connection part. Examples include connections implemented by an elastically or flexibly deformable component, such as connections by means of silicone, rubber, a flexible band, or the like. Of course, the connector cover plate 415 and the temple cover plate 416 may also be rotatably connected with each other so as to be rotated with the bending of the temple 405, without influencing the bending of the temple 405. Of course, the connector cover plate 415 and the temple cover plate 416 may also be in clearance fit with each other. When the temple 405 switches between folding and unfolding, the ends of the connector cover plate 415 and the temple cover plate 416 opposite to each other do not interfere, and thus do not influence the unfolding and folding of the temple 405. An unfolded state and a folded state of the temple 405 can be seen in Figs. 49 and 50.

### Embodiment 2

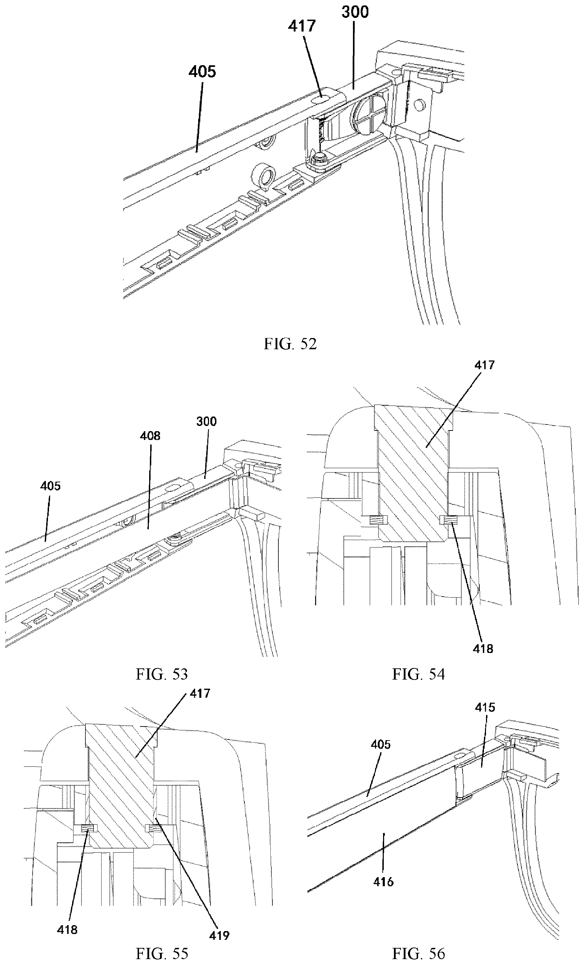

As shown in Figs. 51 and 52, the third component 300 and the temple 405 are rotatably connected by cooperation of pins 417 and the circlips 418. For example, further in conjunction with Fig. 51, the third component 300 and the temple 405 are frame-shaped structures, opposite ends of which are adapted to each other. The end of the temple 405 encloses the outside of the end of the third component 300. An upper side wall 301 of the temple 405 and an upper side wall 301 of the third component 300 are provided with corresponding upper assembly holes, respectively. A lower side wall 301 of the temple 405 and a lower side wall 301 of the third component 300 are provided with corresponding lower assembly holes, respectively. Two pins 417 may be provided, and the two pins 417 are respectively mounted in the upper assembly holes and the lower assembly holes. A portion of each pin 417 that extends out of the assembly hole is sleeved with a circlip 418 to limit the pin 417 in the assembly hole.

The pin 417 may be in close fit with the assembly hole to provide rotational damping, as seen in Fig. 54. Alternatively, a washer 419 is provided between the pin 417 and the assembly hole, i.e., a portion of the pin 417 located in the assembly hole is sleeved with a washer 419 to provide rotational damping, as seen in Fig. 55. Of course, the pins 417 may also be replaced with other shaft-like components, which are not limited to the pins 417.

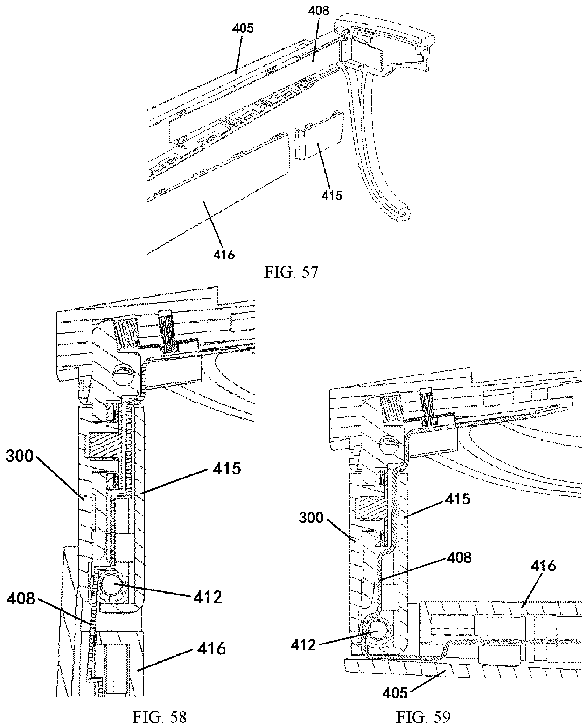

As shown in Fig. 53, after the temple 405 and the third component 300 are hinged, the data line 408 extends from the spectacle frame 404 through the third component 300 to the temple 405. As shown in Figs. 56 and 57, the glasses 400 further include a connector cover plate 415 and a temple cover plate 416. The cover plates can position the data line 408 inside the third component 300 and the temple 405. The mode of connection, mode of cooperation and the like of the connector cover plate 415 and the temple cover plate 416 may be same as in embodiment 1 and will not be described here.

As shown in Figs. 58 and 59, the temple 405 can be unfolded and folded relative to the third component 300, and is convenient to store and carry after being folded.

The glasses 400 in embodiments of the present application can be flared outwards and swing up and down, and can also be folded, which improves the use experience of a user wearing the glasses 400. An outward-splaying resilience function is implemented by the resilient rod, the compression spring 210, the elastic block 213, the resilient piece, the resilient piece group 215, etc., and swing damping is provided by the disc elastic piece 306, which makes wearing more comfortable. By means of reasonable structural arrangement, it achieves the function that the data line 408 is passed through from the inside and the overall structure is sealed.

The above description is intended to be illustrative rather than limiting, and those of ordinary skill in the art may make changes, modifications, substitutions, and variations to the above-described embodiments in the scope of the present disclosure. Moreover, the above-described examples (or one or more solutions thereof) may be used in combination with each other, and it is contemplated that these embodiments may be combined with each other in various combinations or arrangements. The scope of the present application shall be determined by reference to the full scope of the appended claims and equivalents claimed in the claims.

## Claims

1. A rotating shaft mechanism, comprising:
a first shaft;
a first component having a first abutting portion; and
a second component having a second abutting portion, the second component being rotatably connected to the first component by the first shaft, and the second component being rotatable relative to the first component in a preset angular range and having a first position and a second position,
wherein the first component and the second component are configured in one of the following arrangements:
the first component comprises a cooperating portion, the cooperating portion adjoining the first abutting portion, with a first included angle therebetween, wherein when the second component is in the first position, the first abutting portion interacts with the second abutting portion to maintain the second component in the first position, and when the second component is in the second position, the cooperating portion interacts with the second abutting portion to maintain the second component in the second position; and
the second component comprises a cooperating portion, the cooperating portion adjoining the second abutting portion, with a second included angle therebetween, wherein when the second component is in the first position, the first abutting portion interacts with the second abutting portion to maintain the second component in the first position, and when the second component is in the second position, the first abutting portion interacts with the cooperating portion to maintain the second component in the second position.

2. The rotating shaft mechanism according to claim 1, wherein the rotating shaft mechanism further comprises an elastic element, the elastic element is arranged between the first component and the second component and configured to provide a resetting force for the second component to rotate from the second position toward the first position.

3. The rotating shaft mechanism according to claim 1 or 2, wherein the first abutting portion is a first flat surface, the second abutting portion is a second flat surface, and the cooperating portion is configured in one of the following arrangements:
the first component comprises the cooperating portion, the cooperating portion being an inclined surface at the first included angle with respect to the first flat surface, wherein the first flat surface is fitted to the second flat surface when the second component is in the first position, and the inclined surface is fitted to the second flat surface when the second component is in the second position; and
the second component comprises the cooperating portion, the cooperating portion being an inclined surface at the second included angle with respect to the second flat surface, wherein the first flat surface is fitted to the second flat surface when the second component is in the first position, and the inclined surface is fitted to the first flat surface when the second component is in the second position.

4. The rotating shaft mechanism according to claim 2, wherein the cooperating portion is formed on the first component; one end of the elastic element abuts against a portion, of the second component, that is configured to interact with the first abutting portion of the first component, and the other end of the elastic element abuts against a portion of the first component opposite to the first abutting portion; and the first shaft is more adjacent to the cooperating portion relative to the elastic element.

5. The rotating shaft mechanism according to claim 4, wherein the second component comprises a pivot portion; the second abutting portion is located on a first side of the pivot portion; a portion of a second side of the pivot portion corresponding to the first abutting portion of the first component is provided with an elastic element mounting base; one end of the elastic element is positioned on the elastic element mounting base; a portion of the second side of the pivot portion corresponding to the cooperating portion of the first component comprises a shaft base; and the first shaft is passed through the shaft base.

6. The rotating shaft mechanism according to claim 5, wherein the first component has an outer side wall, a front side wall and an inner side wall that define an accommodating cavity, the accommodating cavity is configured to accommodate the elastic element; an upper portion of the outer side wall forms the first abutting portion, and a lower portion of the outer side wall is inclined outwardly and forms the cooperating portion; an upper portion of the second component forms the pivot portion, and a side of the pivot portion adjacent to the outer side wall is the first side and forms the second abutting portion; and the second abutting portion corresponds to both the first abutting portion and the cooperating portion.

7. The rotating shaft mechanism according to claim 2, wherein the elastic element comprises a first resilient rod and a second resilient rod which are located on two opposite sides of the first shaft, respectively; the first resilient rod and the second resilient rod pass through the second component, and the first resilient rod and the second resilient rod deform in opposite directions to provide the resetting force for the second component to rotate from the second position toward the first position, wherein the second component comprises a first protrusion located on a first side thereof and a second protrusion located on a second side thereof; the first resilient rod is passed through the first protrusion and is fixed at two ends to the first component; and the second resilient rod is passed through the second protrusion and is fixed at two ends to the first component.

8. The rotating shaft mechanism according to claim 2, wherein the cooperating portion is formed on the second component; the first component and the second component define an accommodating portion; the elastic element is an elastic block or resilient piece, and the elastic block or resilient piece is arranged in the accommodating portion; and when the second component is in the second position, the elastic block or resilient piece deforms to provide the resetting force for the second component to rotate from the second position toward the first position.

9. The rotating shaft mechanism according to claim 2, wherein the elastic element comprises an resilient piece group comprising a plurality of resilient pieces stacked successively on top of each other; the cooperating portion is formed on the first component; the resilient piece group acts on an end face of the second component adjacent the second abutting portion; and when the second component is in the second position, the resilient piece group deforms to provide the resetting force for the second component to rotate from the second position toward the first position.

10. The rotating shaft mechanism according to any of claims 1 to 9, wherein one of the first included angle and the second included angle defines a preset angular range of the second component with respect to the first component, the preset angular range being from 0 to 180 degrees minus one of the first included angle and the second included angle.

11. The rotating shaft mechanism according to any of claims 1 to 10, wherein the rotating shaft mechanism further comprises a third component, which is rotatably connected to the second component by a second shaft, and an axis of the second shaft is perpendicular to an axis of the first shaft.

12. The rotating shaft mechanism according to claim 11, wherein a disc elastic piece is sleeved on the second shaft, and the disc elastic piece is configured to provide rotational damping to the third component, wherein the second shaft is configured in one of the following arrangements:
the second shaft is connected to the third component and passed through the second component, such that the second component is capable of rotating about the second shaft, and
the second shaft is passed through the third component and the second component, such that the third component is capable of rotating about the second shaft.

13. The rotating shaft mechanism according to claim 12, wherein the third component comprises a frame-shaped structure enclosed by two side walls and a bottom wall, the bottom wall being provided with a protruding column having a center hole arranged in the frame-shaped structure; the second component is arranged in the frame-shaped structure, and the protruding column is passed through the second component; the second shaft is the protruding column; and the connection mechanism further comprises a pin shaft, the pin shaft is mounted in the center hole of the protruding column, and the disc elastic piece is pressed between the protruding column and the head of the pin shaft.

14. The rotating shaft mechanism according to claim 13, wherein the bottom wall is provided with a first tooth portion, and the second component is provided with a second tooth portion adapted to the first tooth portion; and the first tooth portion and the second tooth portion are configured such that when the third component rotates relative to the second component, the first tooth portion and the second tooth portion are in elastic contact and move relative to each other to provide rotational damping.

15. Glasses comprising: a spectacle frame and temples, the glasses further comprising the rotating shaft mechanism of any of claims 1 to 14, wherein the spectacle frame is configured as the first component, and each temple is connected to the spectacle frame by the second component.
